# EUROPÄISCHE PATENTSCHRIFT

(11) **EP 2 251 847 B1**
(45) Veröffentlichungstag und Bekanntmachung des Hinweises auf die Patenterteilung: **24.02.2016**
(21) Anmeldenummer: 09006434.6
(22) Anmeldetag: 13.05.2009
(51) Int. Cl.: G01J 5/08, G01J 5/02, G08B 17/12, G08B 29/18, G01J 5/00

(54) **Vorrichtung und Verfahren zum Detektieren von Flammen mittels Detektoren**
Device and method for detecting flames with detectors
Dispositif et procédé de détection de flammes à l'aide de détecteurs

(43) Veröffentlichungstag der Anmeldung: 17.11.2010
(73) Patentinhaber: Minimax GmbH & Co. KG, 23840 Bad Oldesloe (DE)
(72) Erfinder: Dittmer, Hauke, Dipl.-Ing., 23769 Fehmarn OT. Bannesdorf (DE); Siemer, Dirk, Dipl.-Ing., 23847 Rethwisch (DE)

(56) Entgegenhaltungen:
- DE-A1- 3 140 678
- FR-A1- 2 380 542
- US-A- 4 233 596
- US-A1- 2005 195 086

## Beschreibung

Die Erfindung betrifft eine Vorrichtung zum Detektieren von Flammen mittels Detektoren entsprechend dem Oberbegriff des ersten Patentanspruches und ein Verfahren zum Detektieren von Flammen mittels Detektoren entsprechend den Merkmalen des Patentanspruches 10.

Die Erfindung ist überall dort anwendbar, wo ein sicheres Erkennen von Flammen unabhängig von störenden Einflußgrößen wie Umgebungstemperatur, Störstrahlungen oder dem Blickwinkel der Erfassungs- oder Detektionseinheit erforderlich ist.

Zum Detektieren von Flammen im Zusammenhang mit Alarmierungs- und Feuerlöscheinrichtungen ist es bekannt, mittels Detektor die Wellenlängen der Flammen zu erfassen, in ein elektrisches Signal umzuwandeln und dieses an eine nachgeschaltete Auswerteeinrichtung zum Auswerten des Detektorsignals zuzuführen.

Aus EP 0 926 647 B1 geht eine Feuerdetektierungsverfahren zum Erkennen eines Brandes in einem überwachten Bereich hervor, bei dem Sensoren verwendet werden, die auf eine Strahlung innerhalb einer entsprechenden Bandbreite reagieren. Eine Betrachtung der Winkel- und Temperaturabhängigkeit erfolgt nicht. Es ist nicht vorgesehen, daß bei minimaler / maximaler Temperatur und bei maximalem Einfallswinkel die drei Wellenlängebereiche sich nicht überlappen dürfen. Es wird die Kreuzkorrelation angewandt. Dieses ist in der vorliegenden Erfindung aufgrund der gleichzeitigen Abtastung der Signale und des symmetrischen Aufbaus nicht nötig.

AT 381406 B und CH000000628171A zeigt eine ähnliche Vorrichtung, bei der nur zwei Sensoren verwendet werden und mittels Hardwareschaltung, einem Bypass, die Lagerfrequenz herausgefiltert wird. Eine Betrachtung der Winkelabhängigkeit erfolgt nicht. Es ist auch keine digitale Signalverarbeitung über einen Microcontroller beschrieben.

In DE102008024496A1 ist eine Vorrichtung zum Detektieren von Flammen beschrieben, bei der zwei Sensoren vorhanden sind. Auch diese Vorrichtung ist nicht geeignet, die Winkelabhängigkeit zu berücksichtigen. Es erfolgt auch keine digitale Signalbearbeitung über einen Microcontroller.

DE 3140678 A1 beschreibt einen Infrarot (IR)-Flammenmelder mit drei IR-Sensoren. Die Falschalarmminimierung wird nur hinsichtlich der Ausblendung von IR-Strahlung von Quellen im Bereich von 2 bis 5µm, die keine Flammen darstellen, gelöst. Es werden keine Lösungen beschrieben, die identische Detektoren mit identischer Signalverarbeitung zur einfachen Ausblendung von Störgrößen verwenden. Nachteilig ist an dieser Lösung, daß z. B. elektromagnetische Strahlung im z. B. MHz- und GHz-Frequenzbereich, welche auch nach den Sensoren in die elektronische Schaltung eingekoppelt werden kann, zur Fehlalarmierung führen kann. Es sind keine Lösungen beschrieben, die solche Fehlalarmierungen verhindern könnten.

US 4,233,596 A beschreibt ein Infrarot Meßgerät mit zwei IR-Sensoren mit unterschiedlichen Wellenlängen um schwarzen Rauch in einer Nutzflamme (Leuchtfeuer) festzustellen. Nachteilig ist, daß diese Lösung nicht für eine falschalarmminimierte Erkennung von zufällig auftretenden Flammen bei einem Brandereignis verwendet werden kann.

Problematisch an den bekannten Einrichtungen zum Detektieren von Flammen ist, daß es durch Störung von Einflußgrößen wie der Umgebungstemperatur, Störstrahlungen, beispielsweise bei Sonnenstrahlung oder dem Blickwinkel, in dem die Erkennungseinrichtung angeordnet ist, zu Verfälschungen der erfaßten Detektionswellenlängen kommt, so daß es aufgrund eines Fehlalarms zu einer Auslösung der Alarmierungseinrichtung oder der Feueriöscheinrichtung kommen könnte.
Des Weiteren ist problematisch, daß bei den bekannten Einrichtungen zur teilweisen Kompensation dieser Störgrößen aufwendige Berechnungsverfahren und lange Messzyklen erforderlich werden. Damit verbunden ist eine hohe Energieaufnahme und eine lange Reaktionszeit für die Flammenerkennung.

US 2005/195086 A1 beschreibt einen IR-Flammenmelder mit drei unterschiedlichen IR-Empfängerelementen. Die Signale der Detektoren gehen direkt, seriell in den Prozessor. Damit ist keine zeitgleiche, synchrone Signalaufnahme möglich. Es wird keine Lösung beschrieben, die identische Detektoren mit identischer Signalverarbeitung zur einfachen Ausblendung von Störgrößen, die zur Fehlalarmierung führen, verwendet. Insbesondere die Beschreibung, daß die Signale der Detektoren direkt seriell in den Prozessor gehen, zeigt, daß keine zeitliche, synchrone Signalaufnahme möglich ist.

Aufgabe der Erfindung ist es, eine Vorrichtung und ein Verfahren zu entwickeln, bei dem das Ergebnis der Detektion nicht oder sehr wenig durch störende Einflußgrößen, wie die Umgebungstemperatur, Störstrahlungen, Blickwinkel verfälscht wird und bei dem eine einfache und energiesparende Signalauswertung erfolgt und kurze Reaktionszeiten zur Flammendetektion eingehalten werden.

Diese Aufgabe wird durch eine Vorrichtung zum Detektieren von Flammen mittels Detektor mit nachgeschalteter Auswerteeinrichtung für das Auswerten des Detektorsignals nach den Merkmalen des ersten Patentanspruches und ein Verfahren zum Detektieren von Flammen nach Anspruch 10 gelöst.

Unteransprüche geben vorteilhafte Ausgestaltungen der Erfindung wieder.

Die erfindungsgemäße Vorrichtung zum Detektieren von Flammen mittels Detektor mit nachgeschalteter Auswerteeinrichtung für die Auswertung der Detektorsignale weist mindestens zwei identische Detektoren auf, die nebeneinander angeordnet sind. Wichtig ist, daß die Detektoren identisch sind. Jeder Detektor ist mit einer identischen Signalverarbeitung und einem symmetrischen und gleichen Layout versehen. Bei der Signalverarbeitung handelt es sich um Verstärker und A/D-Wandler. Jeder der Detektoren befindet sich hinter einem vorgeschalteten Filter, wobei die Filter unterschiedliche Wellenlängenbereiche ausfiltern. Die Verstärker sind in den Sensoren Integriert. Das Signal wird also direkt an der Quelle verstärkt. Einflüsse von Elektromagnetischer Strahlung werden daher minimiert und müssen nicht durch aufwendige Algorithmen ausgeblendet werden. Auch die Integration der AD-Wandler den Sensoren ist aus diesem Grund denkbar.

Die Signalerfassung muß zeitgleich und synchron erfolgen, so daß die genaue Analyse der empfangenen Strahlung durch einfache Algorithmen unabhängig von störenden Einflußgrößen möglich ist. Da die einzelnen Signale der einzelnen Detektoren alle mit der gleichen Störgröße beaufschlagt sind, können diese Störgrößen mit einem einfachen Algorithmus ausgeblendet werden. Der Wertebereich der Signale wird daher nicht eingeschränkt. Es können also aus einer großen Anzahl von Werten Alarmkriterien errechnet werden.

Vorteilhaft Ist es, drei Infrarot-Detektoren zu verwenden, wobei der erste Detektor einen Wellenlängenbereich oberhalb der Flammenwellenlänge erfaßt, der zweite Detektor eine flammentypische Wellenlänge erfaßt und der dritte Detektor einen Wellenlängenbereich unterhalb der Flammenwellenlänge erfaßt.

Weiterhin ist es wichtig, daß die vorgeschalteten Filter hinsichtlich der Wellenlängenbereiche keine Überlappung über den Sichtbereich und die Umgebungstemperaturbereiche aufweisen.

Vorteilhaft ist es weiterhin, vor den Detektoren und den Filtern ein Fenster anzuordnen.

Weiterhin ist es vorteilhaft, daß jeder Detektor mit einer separaten Strahlungsquelle auf Funktion und Sichtfähigkeit überwacht wird. Entsprechende Maßnahmen sind dem Techniker bekannt. Dazu können Strahlungsquellen im Wellenlängebereich der Filter und Reflektionselemente benutzt werden.

Weiterhin ist es vorteilhaft, daß eine Microcontrollereinhelt die synchrone Steuerung der Signalaufbereitung übernimmt und somit einen energiesparenden Betrieb ermöglicht.

Durch die Verwendung gleicher Detektoren und gleicher Signalaufbereitungen, sowie die symmetrische und gleichartige Gestaltung der Leiterbahnverlegung, des Layoutes, sowie durch die zeitglelche Steuerung der Signalaufnahme, wird sichergestellt, daß Störgrößen, wie z.B. Elektromagnetische Strahlung, auf allen optischen Empfangskanälen gleichförmig auftreten. Diese gleichförmigen Störungen können ohne aufwendige Algorithmen, wie z. B. Kreuzkorrelation,sehr schnell und effizient kompensiert werden.

Zudem entfallen Zeit und Energie beanspruchende Berechnungsverfahren, da alle Signale synchron, also zeitgleich aufgenommen werden.

Eine schnelle Detektion von Flammen ist für die Ansteuerung von Löschanlagen oft entscheidend und minimiert den Brandschaden.

Eine energiesparende Schaltung ist bei, in der Regel über Akkumulatoren Notstrom versorgten, Brandmeldesystemen wichtig.

Im Folgenden wird die Erfindung an vier Figuren und einem Ausführungsbeispiel näher erläutert. Die Figuren zeigen:
- Figur 1:: Schematische Darstellung der erfindungsgemäßen Vorrichtung zum Detektieren von Flammen
- Figur 2:: Schematische Darstellung der erfindungsgemäßen Vorrichtung zum Detektieren von Flammen mit in den Detektoren integrierten AD-Wandlern
- Figur 3:: Filterdurchlaßkurven ohne Wellenverschiebung
- Figur 4:: Filterdurchlaßkurven mit maximaler negativer Wellenverschiebung
- Figur 5:: Filterdurchlaßkurven mit maximaler positiver Wellenlängenverschiebung

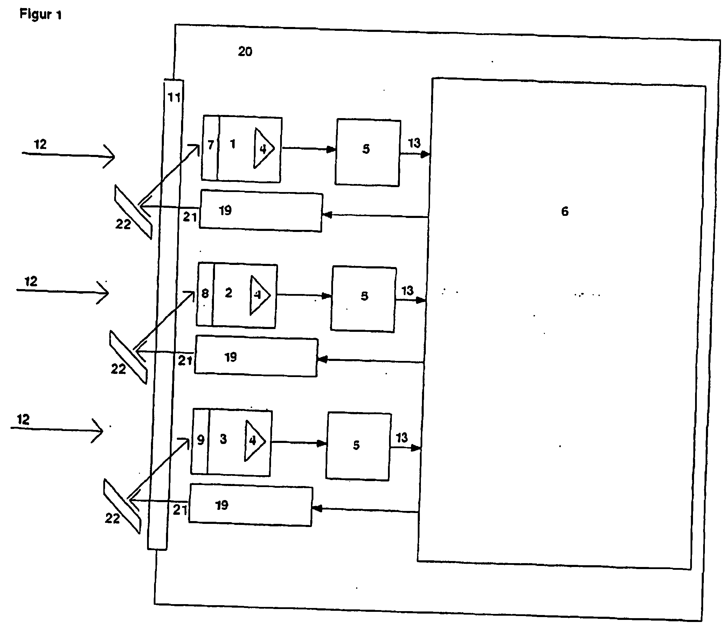

Die *Figur 1* zeigt eine Strahlung 12, die auf die erfindungsgemäße Vorrichtung, den Flammenmelder 20 trifft, in der die identischen Detektoren 1, 2 und 3 neben- oder übereinander angeordnet sind. Den drei Detektoren 1, 2, 3 ist ein Filter 7, 8, 9 vorgeschaltet. Vor den Filtern 7, 8, 9 ist am Flammenmelder 20 ein Fenster 11 angeordnet. Jeder Filter 7, 8, 9 filtert vor dem jeweiligen Detektor 1, 2, 3 einen bestimmten Wellenlängenbereich heraus. Der in den Detektoren integrierte Verstärker 4 verstärkt das Signal der Detektoren. Dieses Signal wird mit den AD-Wandlem 5 gleichzeitig abgetastet und Ober eine jeweilige serielle Schnittstelle 13 an den Microcontroller 6 weitergegeben. Aus den Signalen der einzelnen Detektoren 1, 2, 3 wird unter Eliminierung von Störgrößen ein Alarmsignal errechnet und bei Bedarf ein Alarm ausgelöst. Eine mögliche Verschmutzung des optischen Fensters 20 oder ein Defekt der Detektoren 1, 2, 3 wird mit Hilfe von Strahlungsquellen 19 innerhalb, und Reflektoren 22 außerhalb des Flammenmelders 20 detektiert. Die Strahlungsquellen 19 senden eine im Wellenlängenbereich des jeweiligen Filters 7 liegende Strahlung 21 aus, die an den Reflektoren 22 reflektiert wird und durch das optischen Fenster 11 auf die Detektoren 1, 2, 3 gelangt.

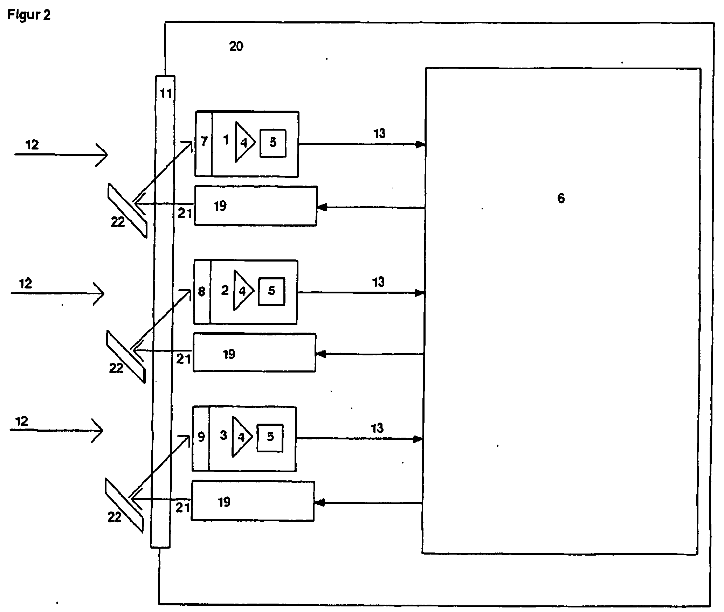

Die *Figur 2* zeigt eine ähnliche Darstellung, jedoch sind die AD-Wandler 5 in den Detektoren 1, 2, 3 integriert.

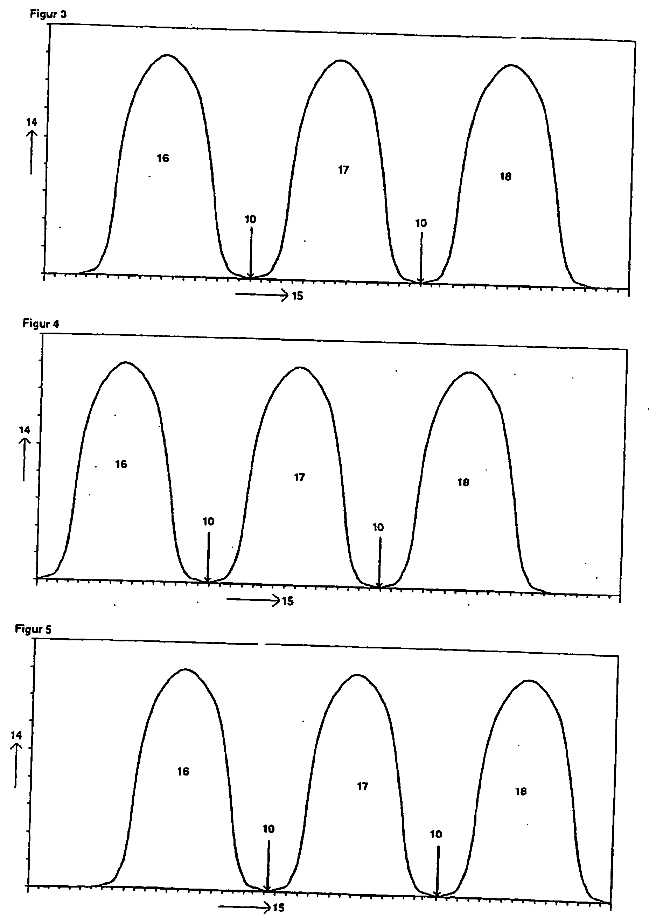

Die *Figuren 3 bis* 5 stellen Filterdurchlaßkurven dar, wobei die Transmission 14 über der Wellenlänge 15 aufgetragen ist. Von jedem Detektor 1, 2, 3 werden mit dem davor geschalteten Filter Wellenlängen erfaßt, wobei die Figuren 4 und 5 maximale negative Wellenlängenverschiebungen und maximale positive Wellenlängenverschiebungen aufgrund von unterschiedlichen Einfallswinkeln der Strahlung darstellen. Der erste Wellenlängebereich (Kurve 16) entspricht dem Transmissionsbereich von Filter 7 unterhalb des Wellenlängenbereiches von Flammen. Der mittlere Wellenlängenbereich (Kurve 17) entspricht dem Transmissionsbereich von Filter 8 im Wellenlängenbereich der zu erwartenden Flammen. Der rechte Wellenlängenbereich (Kurve 18) entspricht dem Transmissionsbereich von Filter 9 oberhalb des Wellenlängenbereiches der zu erwartenden Flammen. Zwischen den Wellenlängenbereichen 16, 17, 18 befindet sich ein Bereich 10, in dem nur eine sehr geringe Überlappung zwischen den Bereichen auftritt.

Die zur Flammendetektion herangezogene Wellenlänge ist dabei die Mittelwellenlänge 17. während eine zweite Wellenlänge unterhalb dieses Bereiches 16 oder oberhalb dieses Bereiches 18 ausgewählt wird. Idealerweise ist die Wellenlänge 17 zur Flammendetektion bei Kohlenstoff haltigen Bränden in einem Bereich, welcher der CO- und CO₂-Bande entspricht und den Einfluss der Sonnenstrahlung minimiert. Bei Flammen ist die Intensität des Signals der Wellenlängenbereiche 16, 18 oberhalb und unterhalb des Mittelwellenlängenbereiches 17 sehr viel geringer als die Intensität des Signals im Mittelwellenlängenbereiches. Das Verhältnis zwischen den Signalen wird ausgewertet. Bei unterschiedlichen Einfallswinkeln verändert sich der Transmissionsbereich der Filter 7, 8, 9. Um das Verhältnis der Signale auswerten zu können, dürfen sich die Transmissionsbereiche der Filter 7, 8, 9 bei unterschiedlichen Temperaturen und unterschiedlichen Einfallswinkeln nicht oder real nur gering überlappen.

## Patentansprüche

1. Vorrichtung zum Detektieren von Flammen mittels Detektoren, die über einen vorgeschalteten Filter jeweils andere Wellenlängenbereiche erfassen, mit nachgeschalteten Auswerteeinrichtungen für das Auswerten der Detektorsignale, **dadurch gekennzeichnet, daß**
- mindestens zwei identische Detektoren (1, 2, 3) nebeneinander angeordnet sind und
- jeder Detektor (1, 2, 3) mit einer identischen Signalverarbeitung und einem symmetrischen und gleichen Layout, Leiterbahnführung, versehen ist, wobei die identische Signalverarbeitung mittels Verstärker (4) und A/D-Wandler (5) vorgenommen wird, und
- die Vorrichtung geeignet ist, die Signalerfassung aller Detektoren zeitgleich und synchron durchzuführen, so daß die genaue Analyse der empfangenen Strahlung (12, 21) durch einfache Algorithmen unabhängig von störenden Einflußgrößen ermöglicht wird.

2. Vorrichtung nach Anspruch 1, **dadurch gekennzeichnet, daß** drei Infrarotdetektoren verwendet werden und der erste Detektor (1) einen Wellenlängenbereich (16) oberhalb der Flammenwellenlänge erfasst, der zweite Detektor (2) eine flammentypische Wellenlänge(17) erfasst und der dritte Detektor (3) einen Wellenlängenbereich (18) unterhalb der Flammenwellenlänge erfasst.

3. Vorrichtung nach Anspruch 1 und 2, **dadurch gekennzeichnet, daß** die vorgeschalteten Filter (7, 8, 9) hinsichtlich der Wellenlängenbereiche (16, 17, 18) keine Überlappungen über den Sichtwinkelbereich und die Umgebungstemperaturbereiche aufweisen.

4. Vorrichtung nach Anspruch 3, **dadurch gekennzeichnet, daß** vor den Detektoren (1, 2, 3) mit Filter (7, 9) ein Fenster (11) angeordnet ist.

5. Vorrichtung nach Anspruch 4, **dadurch gekennzeichnet, daß** jeder Detektor (1, 2, 3) mit einer separaten Strahlungsquelle (19) auf Funktion und Sichtfähigkeit überwacht wird.

6. Vorrichtung nach Anspruch 1 bis 5, **dadurch gekennzeichnet, daß** eine Mikrocontrollereinheit (6) die synchrone Steuerung und Signalaufbereitung übernimmt und einen energiesparenden Betrieb ermöglicht.

7. Vorrichtung nach einem der Ansprüche 1 bis 6, **dadurch gekennzeichnet, daß** in den Detektor (1, 2, 3) die Signalvorverstärkung (4)integriert ist.

8. Vorrichtung nach Anspruch 7, **dadurch gekennzeichnet, daß** in den Detektor (1, 2, 3) die AD-Wandlung (5) integriert ist.

9. Verfahren zum Ausblenden von Störgrößen beim Detektieren von Flammen mit einer Vorrichtung nach einem der Ansprüche 1 bis 8, **dadurch gekennzeichnet, daß**
- Mindestens zwei Signale unterschiedlicher Wellenlängenbereiche (16, 17, 18) der Strahlung (12) eines möglichen Brandgeschehens von mindestens zwei nebeneinander angeordneten identischen Detektoren (1, 2, 3) zeitlich und synchron erfaßt werden und
- die Signalverarbeitung in identischen Signalverarbeitungsschaltungen, Verstärker, A/D-Wandler, mit einem symmetrischen und gleichen Layout, Leiterbahnführung, erfolgt, wobei
- die Signalerfassung aller Detektoren zeitgleich und synchron durchgeführt wird,
- so daß gleiche Störgrößen, mit welchen die einzelnen Signale der Flammenemission der einzelnen Detektoren überlagert werden, mit einfachen Algorithmen ausgeblendet werden können.

10. Verfahren nach Anspruch 10, **dadurch gekennzeichnet, daß** die Abtastung der Signale der Detektoren (1, 2, 3) synchron durch den Mikrokontroller (6) erfolgt.

## Claims

1. A device for detecting flames with detectors, that detect, by means of an upstream filter, in each case a different wavelength range, having downstream evaluation units for evaluating the detector signals, **characterized in that**
- at least two identical detectors (1, 2, 3) are arranged side by side, and
- each detector (1, 2, 3) is provided with an identical signal processing and a symmetrical and identical layout, track routing, the identical signal processing being carried out by means of amplifier (4) and A/D converter (5), and
- the device is suited to carry out the signal detection of all detectors concurrently and synchronously, so that the precise analysis of the received radiation (12, 21) is made possible by simple algorithms independently of disturbing influence quantities.

2. The device according to Claim 1, **characterized in that** three infrared detectors are used and the first detector (1) detects a wavelength range (16) above the flame wavelength, the second detector (2) detects a flame-typical wavelength (17) and the third detector (3) detects a wavelength range (18) below the flame wavelength.

3. The device according to Claim 1 and 2, **characterized in that** the upstream filters (7, 8, 9) do not exhibit any overlaps in terms of the wavelength ranges (16, 17, 18) across the viewing-angle range and the ambient-temperature ranges.

4. The device according to Claim 3, **characterized in that** a window (11) is arranged in front of the detectors (1, 2, 3) with filter (7, 9).

5. The device according to Claim 4, **characterized in that** each detector (1, 2, 3) is monitored in terms of function and visibility using a separate radiation source (19).

6. The device according to Claim 1 to 5, **characterized in that** a micro controller unit (6) takes over the synchronized control and signal conditioning and enables energy-saving operation.

7. The device according to one of Claims 1 to 6, **characterized in that** signal preprocessing (4) is integrated into the detector (1, 2, 3).

8. The device according to Claim 7, **characterized in that** the AD conversion (5) is integrated into the detector (1, 2, 3).

9. A method for gating disturbance variables when detecting flames with a device according to one of Claims 1 to 8, **characterized in that**
- at least two signals having different wavelength ranges (16, 17, 18) of the radiation (12) of a possible fire event are detected concurrently and synchronously by at least two identical detectors (1, 2, 3) arranged side by side, and
- signal processing takes place in identical signal-processing circuits, amplifiers, A/D converters, having a symmetrical and identical layout, track routing,
- signal detection of all detectors being carried out concurrently and synchronously,
- so that identical disturbance variables, with which the individual signals of the flame emission of the individual detectors are superposed, can be gated using simple algorithms.

10. The method according to Claim 9, **characterized in that** sampling the signals of the detectors (1, 2, 3) takes place synchronously by the micro controller (6).

## Revendications

1. Dispositif de détection de flammes au moyen de détecteurs captant chacun une gamme de longueur d'onde différente par l'intermédiaire d'un filtre monté en amont, comportant en aval des dispositifs d'évaluation des signaux des détecteurs, **caractérisé en ce que**
- au moins deux détecteurs identiques (1, 2, 3) sont juxtaposés et
- chaque détecteur (1, 2, 3) est doté d'un traitement identique des signaux et d'une même configuration symétrique, schéma d'implantation, le traitement identique des signaux étant réalisé au moyen d'un amplificateur (4) et d'un convertisseur A/N (5), et
- le dispositif est à même d'opérer le captage des signaux de tous les détecteurs en simultanéité et en synchronisme, permettant ainsi l'analyse précise du rayonnement reçu (12, 21) par des algorithmes simples, indépendamment de grandeurs d'influence parasites.

2. Dispositif selon la revendication 1, **caractérisé en ce que** sont utilisés trois détecteurs infrarouge et que le premier détecteur (1) capte une gamme de longueur d'onde (16) située au-dessus de la longueur d'onde des flammes, le deuxième détecteur (2) une longueur d'onde typique des flammes (17), et le troisième détecteur (3) une gamme de longueur d'onde (18) située au-dessous de la longueur d'onde des flammes.

3. Dispositif selon les revendications 1 et 2, **caractérisé en ce que** les filtres montés en amont (7, 8, 9) ne présentent pas de recoupements des gammes de longueur d'onde (16, 17, 18) sur la gamme d'angle de vision et sur les gammes de température ambiante.

4. Dispositif selon la revendication 3, **caractérisé en ce qu'**une fenêtre (11) est disposée devant les détecteurs (1, 2, 3) avec filtre (7, 9).

5. Dispositif selon la revendication 4, **caractérisé en ce que** le bon fonctionnement et la capacité de vision de chaque détecteur (1,2, 3) sont surveillés par une source de rayonnement séparée (19).

6. Dispositif selon les revendications 1 à 5, **caractérisé en ce qu'**une unité microcontrôleur (6) se charge de la commande synchrone et du conditionnement des signaux et permet un fonctionnement économisant l'énergie.

7. Dispositif selon l'une des revendications 1 à 6, **caractérisé en ce que** l'amplification des signaux (4) est intégrée au détecteur (1, 2, 3).

8. Dispositif selon la revendication 7, **caractérisé en ce que** la conversion A/N (5) est intégrée au détecteur (1, 2, 3).

9. Procédé de suppression de grandeurs parasites lors de la détection de flammes à l'aide d'un dispositif selon l'une des revendications 1 à 8, **caractérisé en ce que**
- au moins deux signaux de gammes de longueur d'onde différentes (16, 17, 18) du rayonnement (12) d'un incendie éventuel sont captés en simultanéité et en synchronisme par au moins deux détecteurs identiques juxtaposés (1,2, 3) et
- le traitement des signaux a lieu dans des circuits identiques (amplificateur, convertisseur A/N) et de même configuration asymétrique , schéma d'implantation,
- le captage des signaux de tous les détecteurs s'opère en simultanéité et en synchronisme,
- permettant ainsi de supprimer par des algorithmes simples des grandeurs parasites identiques se superposant aux différents signaux d'émission des flammes des différents détecteurs.

10. Procédé selon la revendication 9, **caractérisé en ce que** l'échantillonnage des signaux des détecteurs (1,2, 3) est opéré en synchronisme par le microcontrôleur (6).
